# EUROPEAN PATENT SPECIFICATION

(11) **EP 1 320 981 B1**
(45) Date of publication and mention of the grant of the patent: **25.10.2006**
(21) Application number: 01958119.8
(22) Date of filing: 03.08.2001
(51) Int. Cl.: H04M 3/42, H04Q 7/38

(54) **METHOD FOR PROVIDING NETWORK SERVICE FOR A MOBILE TELETERMINAL ELEMENT**
VERFAHREN ZUR BEREITSTELLUNG EINES NETZWERKDIENSTES FÜR EIN MOBILENDGERÄTELEMENT
PROCEDE DE SERVICE DE RESEAU POUR ELEMENT DE TELETERMINAL MOBILE

(30) Priority: 03.08.2000 FI 20001745
(43) Date of publication of application: 25.06.2003
(73) Proprietor: Comptel OYJ, 00180 Helsinki (FI)
(72) Inventor: VIITALA, Erkki, FIN-02130 Espoo (FI)
(74) Representative: Tiilikainen, Jarkko Tapio
(86) International application number: PCT/FI2001/000693
(87) International publication number: WO 2002/013499

(56) References cited:
- EP-A1- 0 969 645
- US-A- 5 708 655
- US-A- 5 794 142
- US-A- 6 009 154
- DATABASE WPI Week 9905, Derwent Publications Ltd., London, GB; AN 1999-052593, XP002908713 & JP 10 304 069 A (OKI ELECTRIC IND CO LTD) 13 November 1998

## Description

The present invention relates to a method, according to the preamble of Claim 1, for providing a network service of a mobile network for a mobile teleterminal element. The invention also relates to a method, according to the preamble of Claim 19, for means for operating in a telecommunications network.

Methods of this kind are used, to be able to permit the use of a mobile network, to a mobile teleterminal element, such as a mobile station.

According to the state of the art, a mobile station according to a standard can be used in any mobile network at all that supports a corresponding standard, in which case the mobile station can made to operate over a wider geographical area. A mobile station being used outside of its home network can be provided with a network service, if the subscription card of the mobile station has been changed. A mobile station being used outside of its home network can also be provided with a network service, if a roaming agreement has been made between the operators of the home network and the local network. In that case, the home network operator bills the mobile subscription for the use of the local network. The operator of the local network in turn bills the home network operator with the aid of billing messages, so-called call tickets, sent in the telecommunications network, targeting the mobile station. When using a mobile station outside its home network, by means of changing the subscription card, the subscription card can be, for example, a so-called 'scratch card', which has an attached prepaid right to use the network. When using a temporary subscription card, billing can also be carried out by means of the control of an intelligent network (Hot Billing), and directed to the entity to be billed.

The local network can, as is known, give an address dynamically to a mobile subscription. One such method is disclosed in US patent 5,708,655. With the aid of the method, the mobile subscription is given a temporary address, in which case the routing associated with the permanent address of the mobile subscription is no longer targeted on the mobile station, allowing the routing of data packets to be planned as desired on the basis of the dynamic address.

A drawback of the state of the art is that a mobile teleterminal element, for the identity of which network service have not been defined to be provided in the control system of a mobile network, cannot be provided with network service according to control information received from the direction of the mobile teleterminal element.

Reference is also made to documents US-A-5 794 142 and EP-A-0 969 645. Moreover reference is also made to the "Technical Specification, 3rd Generation Partnership Project; Technical Specification Group Services and System aspects; Charging and Billing" (3G TS 22.105 version 3.1.0), 1999-04. This 3 GGP technical specification aims at enabling UMTS users to obtain chargeable network services with methods with whom neither they nor their home environment have any direct commerical agreement (see in particular chapter 8). A drawback of the proposed solution is that the home network has to interwork with the serving network via trusted third parties in order to obtain a network service agreement for said UMTS user.

The invention is intended to eliminate the defects of the state of the art disclosed above and for this purpose create an entirely new type of method for providing network service for a mobile teleterminal element. The invention is as set out in independent claims 1 and 19, preferred forms being set out in the dependent claims.

The invention is based on using signalling between a mobile teleterminal element and a mobile network to form a network service agreement for the mobile telecommunications element with the mobile network. A message or messages defined by the mobile operator, such as an information network page or pages, are sent in the direction of the mobile teleterminal element. The mobile network receives a response or responses from the direction of the mobile teleterminal element, and, on the basis of these, interprets a network service agreement as having been concluded with the mobile telecommunications element.

More specifically, the method, according to the invention, for providing the network service of a mobile network for a mobile teleterminal element, is characterized by what is stated in the characterizing portion of Claim 1. The means, according to the invention, for operating in a telecommunications network is, in turn, characterized by what is stated in the characterizing portion of Claim 19.

With the aid of the invention, a mobile teleterminal element, for the identity of which network service has not been defined to be provided in the control system of a mobile network, can be provided with network service according to control information received from the direction of the mobile teleterminal element.

The preferred application environment for the invention is packet-switched mobile networks, such as GPRS, EDGE, UMTS, and wireless local area networks providing public service, such as WLAN. The preferred situation for the application of the invention is one in which the teleterminal element is used in a local network, for example, abroad. In that case, the operator of the local network can provide the teleterminal element with network services and bill the possessor of the teleterminal element for them, the equipment of the operator of the home network being thus not required for taking care of the network services and/or billing.

### Terminology:

The term mobile station network resource refers to a telecommunications terminal, a distributed system, a computer program, or the entity, to which a telecommunications connection is to be formed over the trunk network of a mobile network.

A teleterminal element is a device, apparatus, program, software, or combination of these, operating on the customer side of the customer interface of the telecommunications network. A teleterminal element can be, for example, a mobile station smart card, such as a subscriber card, a mobile station, a laptop computer software product, or some combination of these.

The term teleterminal element refers to a teleterminal element, which is set to operate by means of a wireless connection to a mobile network. Such a teleterminal element can be, for example, a mobile station. A teleterminal element can also be, for example, a mobile station smart card, such as a subscriber card, a laptop computer, or a computer software product, which is connected to a mobile network through the functionality of a mobile station.

An agreement proposal message is a message transmitted in digital form, which includes a definition of the service or services available or provided, and of the consideration charged for their use.

A network service agreement is an agreement according to an agreement proposal message for providing and/or using network services and for obtaining and/or receiving consideration for the services.

The term network services refers to a service providing and/or defining the transmission technology requirements for a telecommunications service. The transmission technology requirements are met, if the teleterminal element is defined according to the network service agreement made with the registers of the mobile network, or a related resource, or management system.

The home network of a specific mobile subscription is the mobile network, in some home subscriber register of which the mobile subscription is defined.

A local network is a mobile network, in no home subscriber register of which the mobile subscription is defined.

In the following, the invention is examined with reference to the accompanying drawings.
Figure 1 shows one method according to the invention for setting a mobile network to be ready to provide a network service.
Figure 2 shows one method according to the invention for monitoring the use of telecommunications services.

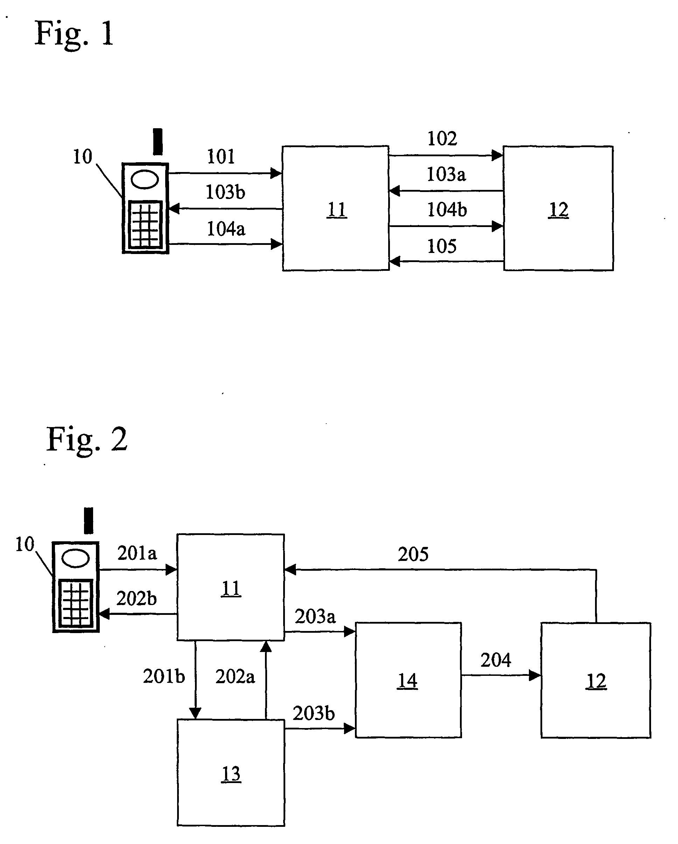

In the description of the method shown in Figure 1, the following numbered elements are used:

The teleterminal element 10 is a mobile teleterminal element, such as a mobile subscription, which is not entered in the home subscription register of the mobile network.

The trunk network 11 of the mobile network is a mobile network trunk network, which includes at least one base station, a subscriber register, and a data packet transmission element.

The subscriber management element 12 is a software and/or apparatus element, forming part of the management system of the mobile network, and which is set to form a network service agreement for a roaming mobile subscription 10 and to set the trunk network of the local network to be available for use by the roaming mobile subscription 10.

In the description of the method shown in Figure 2, the following numbered elements are used:

The mobile network resource 13 is a mobile network resource, which is available for use by a roaming mobile subscription 10, through the trunk network of the local network.

The mediator 14 is an apparatus and/or software, which is set to control and monitor additional services carried out in the mobile network, such as monitoring the billing message in the direction of the subscriber management element 12, corresponding to the operating data messages and operating message coming from the direction of the mobile network resource 13 and/or the subscriber management element 12.

In the method shown in Figure 1 for setting the mobile network to be ready to provide a network service, the following stages are carried out. Stage 101 of the method is carried out, in order to determine whether there are grounds for sending a network service agreement proposal in the direction of the teleterminal element 10:
101) The teleterminal element 10 is connected to a trunk network 11 of the mobile network over a signalling connection and the subscriber register is examined to determine whether the teleterminal element 10 has a network service agreement with the mobile network.

The following stages (102 -105) of the method are carried out in response to a specific kind of subscriber register entry concerning the teleterminal element 10, or in response to the fact that the subscriber register lacks an entry concerning the teleterminal element 10. Stages 102 - 103 are carried out, for the user of the teleterminal element 10 to be able to read, from their mobile station, the agreement proposal message of the operator of the local network. Stages 104 - 105 are carried out in order to provide the network services desired by the user of the teleterminal element 10.
102) A message, which is set to respond to the lack of a subscriber register entry concerning the teleterminal element 10, or a certain kind of subscriber register entry concerning the teleterminal element 10, is sent from the trunk network 11 of the mobile network in the direction of the subscriber management element.
103) An agreement proposal message, such as a Web page containing a proposal for a network service agreement, is sent (103a -103b), under the control of a subscriber management element 12, through the trunk network 11 of the mobile network, in the direction of the teleterminal element 10. The agreement proposal message can state, for example, the acceptable methods of payment, the services and service packets available, the grounds for charging and the price information, and the other terms and conditions of the agreement.
104) A message, which is set to signify acceptance of a network service agreement with a specific content, is received (104a - 104b) through the trunk network 11 of the mobile network, by means of the subscriber management element 12, from the direction of the teleterminal element 10.
105) The subscriber management element 12 is used to instruct the trunk network 11 of the mobile network to make a subscriber register entry, corresponding to the accepted network service agreement, in the subscriber register of the trunk network 11 of the mobile network.

In the method shown in Figure 2, the following stages are carried out to monitor the use of the telecommunications services.

Method stage 201 is carried out, because it is wished to provide the teleterminal element 10 with the possibility to use telecommunications services through the trunk network 11 of the mobile network.
201) The teleterminal element 10 is registered in the subscriber register of the trunk network 11 of the mobile network, according to the network service agreement with a specific content, and a connection creation request, which concerns some element of the trunk network 11 of the mobile network, or a mobile network resource 13, is received (201a) from the direction of the teleterminal element 10.

The registration described above contains the identifier of the teleterminal element 10 and the settings required by the network service agreement with a specific content, such as the identifiers of the services according to the network service agreement. The registration can also contain an amount of the network service available to the teleterminal element 10, such as the amount of money paid, the duration of the roaming time, or the number of times of use.

Stages 202 - 203 are carried out to provide the services according to the network service agreement that has been made and to monitor the use of these services.
202) A data communications connection between the teleterminal element 10 and an element of the trunk network 11 of the mobile network, or between the teleterminal element 10 and a mobile network resource 13, is formed through the trunk network 11 of the mobile network.
203) User data, such as CDR (Call Detail Record) call tickets, concerning the services used by the teleterminal element 10, are received by means of a mediator 14 from the direction of the trunk network 11 of the mobile network and/or of the mobile network resource 13, and at least one billing message is formed from them.

Stages 204 - 205 are carried out to target the billing according to the user data on the teleterminal element 10 and to keep the use of network services permitted to the teleterminal element 10 within the limits defined by the network service agreement that has been concluded
204) At least one billing message is sent from the mediator 14 in the direction of the subscriber management element 12.
205) The functionality of the subscriber management element 12 is used to reduce the amount of the network service available to the teleterminal element 10 on the basis of the billing messages received, and at least one message, which limits the rights of use given to the teleterminal element 10, is sent from the subscriber management element 12 in the direction of the trunk network 11 of the mobile network. The rights of use defined for the teleterminal element 10 in the subscriber register are limited, or the teleterminal element 10 is removed from the subscriber register, in response to at least one message, limiting the rights of use, received in the trunk network of the mobile network.

Embodiments of the invention, differing from those disclosed above, can also be contemplated within the scope of the invention. A new agreement proposal message can be sent from the subscriber management element 12 in the direction of the teleterminal element 10, before the rights of use defined for the teleterminal element 10 are limited in the subscriber register, or the teleterminal element 10 is removed from the subscriber register. If, after this, a message is received from the direction of the teleterminal element 10, which is set to signify acceptance of the network service agreement with a specific content, the subscriber register and the subscriber management element 12 are set to a state corresponding to the network service agreement.

In addition to the roaming teleterminal element 10 being registered in a subscriber register, such as the home subscriber register, of the local network, the services to be provided for the teleterminal element 10, according to the network service agreement, can also be defined in some other system of the operator of the mobile network, such as the subscriber management element 12. This entry can also contain the amount, such as the amount of cash paid or the duration of the roaming time, of the network service available to the teleterminal element 10.

The method according to the invention can also be applied to a teleterminal element, which is defined in a subscriber register of the trunk network 11 of the mobile network. A new kind of network service agreement can be provided for such a mobile subscription.

The method of payment for the network service can be defined in the agreement terms and conditions. In that case, the method of payment can be defined as, for example, a bill or a credit card.

The operations of the subscriber management element 12 and the mediator 14 can also be carried out, differing from the example described, by means of a single device, a distributed system, a computer program, or computer software.
In certain cases of use, the method according to the invention can be used to facilitate payment transfer. The principal purpose of the invention is to send an agreement proposal message and to conclude a telecommunications service agreement concerning at least network services. A teleterminal element utilizing the method according to the invention need not have an active currently valid network service agreement, in order to participate in the conclusion of a telecommunications service agreement according to the invention. In addition, the teleterminal element can also be offered additional services according to the agreement, which do not normally belong to it. The conclusion of a telecommunications service agreement according to the invention does not necessarily require joint operation with the home network of the teleterminal element, or the operator of the home network. The term tele-service, or telecommunications service refers to a service that a service provider provides, in order to satisfy some information and/or telecommunications requirement of its customers. For example, services of a telematic nature, available through a mobile network, are tele-services. These can be produced and/or transmitted in the direction of the teleterminal element, for example, as additional services, in which case the agreement proposal message can include a definition of at least one additional service.

In the method according to the invention, an agreement proposal message is sent in the direction of the teleterminal element at the initiative of the mobile network or a resource behind it. It can contain a proposal for the provision of application services, which provide a network service and possible additional services to the accepting teleterminal element. In the case of the additional services, the mobile network can be set in the role of the intermediary of the services and possibly also of the payment. In the method according to the invention, an agreement can be made on the consideration, or the service can be provided for the teleterminal element without a direct consideration. The consideration can be set to be something other than a cash consideration, for example, the reading of a specific page or specific pages, or the viewing of images, in which case the billing of the teleterminal element is not always essential, when implementing the method according to the invention. The teleterminal element can, however, also be billed according to the telecommunications service agreement and to any possible other agreement concluded in addition to it. Billing can take place, for example, through a network bank or a credit-card system.
Teleterminal elements, which are not customers/subscribers of the mobile network providing the service, are sent an agreement proposal message. The teleterminal elements, to which the agreement proposal message is sent, can be selected, for example, by using a desired criterion to review the selected register/registers, such as a selected VLR (Visitor Location Register), or a related resource or management system, of the mobile network. A sufficient criterion can be that the teleterminal element is connected to the network. It can, however, also concern other definitions relating to the teleterminal element in a register of the mobile network, or a related resource or management system. In order to provide additional services according to the invention, it is also possible to carrying out identification on the basis of the user of the teleterminal element.

As the use of telecommunications networks, such as mobile networks, has become increasingly widespread, a need has arisen to monitor the use of network services, so that the user of a teleterminal element can predict the expenses arising from use. Monitoring is possible with the aid of telecommunication network use limiters. The providers of network or application services can, in turn, use these to prevent the overloading of the network or services. The method according to the invention can be used to set use limiters in a telecommunications network and to implement them in a telecommunications network.

The means for operating in a telecommunications network, which impose a use limit implementing the functionality of use limiters, can be located in the subscriber management element of the telecommunications network, or elsewhere in a telecommunications network, such as in a mobile network. With the aid of use limiters, the use of services provided by a mobile network, or a resource connected to it, can be monitored and limited in the cases of individual users and services. By using means according to the invention, operation in a telecommunications network can be effectively controlled from a mobile network, or through it, in order to limit the performance of the available services.

Means according to the invention for operating in a telecommunications network can be exploited, for example, in the following ways:

A use limiter for a desired service can be set either beforehand, prior to the start of the service, or for a service that a user is already using.

A possibility can be set for the teleterminal element or the service provider to limit the period of validity of the use of the service. The period of validity of the use of the service can be limited, for example, to periods of time of a specific length, which can last, for example, from minutes to months. When each period ends, the possibility to use the service can be prevented, or it can be renewed for the following period.

The user of the teleterminal element can be set to have the possibility, if the service provider approves the arrangement, to continue themselves the period of validity of the service, or to start a new period. This takes place by using the teleterminal element to sent a message expressing the matter to means for operating in the telecommunications network. This message can be a message of commitment by the user, such as a prepayment, a direct debiting agreement, billing permission, or some other message confirming that the service provider will receive a payment for the service.

A limitation of the amount of use of the service can be linked to the telecommunications service agreement concluded according to the invention. The limitation can be expressed, for example, as money, time, or a number of times. According to the amount of use thus approved, it is possible to set an initial balance depicting the initial situation.

The data on the amount of use of the service contained in the billing message sent to the subscriber management element is used to reduce the amount of use available for the service, i.e. the use balance.

A use limiter, which can operate, for instance, in the subscriber management element, can be set to receive a billing message, which states at least the following items: the identifier of the user or the teleterminal element, the identifier of the service to be monitored by the use limiter, the amount of use of the service, such as money, time, or some other unit, the period of use of the service, such as the starting time, the ending time, and the use-balance alarm limit.

If one or several alarm limits are set for the use balance, which are reached before the end of the use balance, a message stating that the alarm limit relating to the use balance has been reached can be sent in the direction of the teleterminal element. A proposal for an increase in the use balance can be attached to the message, so that the use of the service is not suddenly prevented. The user can accept or reject the proposal for increasing the use balance.

Once the entire use balance has been used, the availability of the service to the teleterminal element is removed entirely or in part. After this, a new agreement proposal message can be sent in the direction of the teleterminal element for acceptance or rejection. An increase in the use balance of the use limiter can take place once acceptance has been received from the direction of the teleterminal element. Alternatively, the service provider itself can increase the use balance.

The use limiter may also incorporate functionality for monitoring the losses arises from a campaign that has been implemented, or from some other reason. In a situation in which the amount of use indicated by a billing message exceeds the remains use balance, a loss is incurred by the service provider. The loss is added to a minus balance, which indicates cumulatively, as use time, the accumulated loss of the use limiter in question.

Messages concerning the user limiter can be sent in the direction of the teleterminal element, for example, in the following cases: the creation of the use limiter service, the removal of the use limiter service, alteration of the use balance, or when the alarm limit is reached.

In the present patent application, the terms below refer to the following:

The user is the entity that uses a mobile network or services obtained through it, with the aid of a teleterminal element. The user may be an individual person, a group of people, a company, a group of companies, or someone else who is regarded as being a user. The user may also be a terminal device or data system that operate automatically.

The use limiter is an application for providing an added-value service, in a telecommunications network, such as a mobile network. By setting the use limiter, the user, the operator of the telecommunications network, and/or the service provider can limit and control the use of the service provided. The use limiter can be user and/or service-specific. The user may have one or several use limiters. The use limiter can set to operate, for example, generally in a mobile network, in the subscriber management element of a mobile network, or is some other subscriber management element of a telecommunications network.

The initial balance is a limit, which can be linked to the use limiter. It states the amount of use available at the commencement of the use agreement. The amount of use can be expressed, for example, as money, time, a period of time, or as a number.

The use balance states the amount of use available, relating to the use limiter, at a specific moment. The amount of use can be expressed, for example, as money, time, a period of time, or a number.

The alarm limit is a limit that can be linked user or service-specifically to the user limiter. It can be defined service or user-specifically. In response to reaching the alarm limit, a message can be sent from the use limiter in the direction of the teleterminal element, and/or the teleterminal element's right to use the telecommunications network can be limited.

## Claims

1. A method for providing network service of a mobile network for a mobile teleterminal element, wherein the network service provides and/or defines transmission technology requirements for a telecommunications service, **characterized by**
- sending (103) an agreement proposal message, which contains a proposal for a network service agreement, from the mobile network to the mobile teleterminal element (10), wherein said network service agreement is an agreement on providing and/or using the network service and on a consideration charged for the use of said network service,
- receiving by the mobile network (104) a message, which is set to signify acceptance of the network service agreement with a specific content, from the mobile teleterminal element (10), and
- setting (105) the mobile network to provide the mobile teleterminal element (10) with network services, and to bill for the network services provided, according to the received network service agreement.

2. A method according to Claim 1, **characterized in that**
- an identity of the mobile teleterminal element (10) is received (102) from the direction of the mobile teleterminal element (10),
- a check is made (102), as to whether the identity of the mobile teleterminal element (10) is defined in a subscriber register of the mobile network, such as in some home subscriber register in the mobile network, and
- an agreement proposal message is sent (103) in the direction of the mobile teleterminal element (10), in response to a specific kind of subscriber register entry in a management system of the mobile network.

3. A method according to Claim 1 or 2, **characterized in that**
- the identity of the mobile teleterminal element (10) is received (101) from the direction of the mobile teleterminal element (10),
- a check is made (101), as to whether the identity of the mobile teleterminal element (10) is defined in a subscriber register of the mobile network, such as a home subscriber register, and
- an agreement proposal message is sent (103) in the direction of the mobile teleterminal element (10), in response to the lack of a subscriber register entry concerning the mobile teleterminal element (10) in the management system of the mobile network.

4. A method according to any of Claims 1 - 3, **characterized in that** the agreement proposal message is sent (103) by means of a Web page, or a corresponding type of mobile application.

5. A method according to any of Claims 1- 4, **characterized in that** the acceptable methods of payment, services available, service packets, billing grounds, and/or price information are transmitted (103) in the agreement proposal message.

6. A method according to any of Claims 1-5, **characterized in that** the mobile teleterminal element (10) is registered (201) in the management system (104) of the mobile system, according to the network service agreement with a specific content.

7. A method according to Claim 6, **characterized in that** the entry includes the identifier of the mobile teleterminal element (10) and settings required by the network service agreement with a specific content, such as identifiers of the services according to the network service agreement and an amount of the network service available, for example, amount of money paid and/or connection time.

8. A method according to any of Claims 1-7, **characterized in that**
- a data communications connection is formed (202) through a trunk network (11) of the mobile network, between the mobile teleterminal element (10) and an element of the trunk network (11) of the mobile network, or between the mobile teleterminal element (10) and a mobile network resource (13), and
- use information, such as CDR Call Detail Record call tickets, on the network services used by the mobile teleterminal element (10), is received (203) by means of a mediator (14) from the direction of the trunk network (11) of the mobile network and/or of the mobile network resource,
- at least one billing message is formed from the received use information, and
- the billing message formed is sent in the direction of a subscriber management element (12).

9. A method according to any of Claims 1-8, **characterized in that**
- at least one billing message is sent (204) by means of a mediator (14) in the direction of the subscriber management element (12),
- an amount of tele-service available to the mobile teleterminal element is reduced (205) by means of the functionality of the subscriber management element (12), on the basis of the means of the functionality of the subscriber management element (12), on the basis of the received billing messages, and
- at least one message limiting the right to use the mobile network or the mobile network resource, targeting the mobile teleterminal element (10), is sent from the subscriber management element (12) in the direction of the trunk network (11) of the mobile network.

10. A method according to any of Claims 1- 9, **characterized in that**
- at least one message limiting the rights of use to the mobile teleterminal element (10) is received from the direction of the subscriber management element (12) in the trunk network (11) of the mobile network, and
- in response to the received message limiting the rights of use, the rights of use defined for the mobile teleterminal element (10) in the subscriber register or elsewhere in the management system of the mobile network, are limited to the mobile teleterminal element (10).

11. A method according to any of Claims 1-10, **characterized in that** an agreement proposal message is sent in the direction of the mobile teleterminal element (10), at the initiative of the mobile network, or of a resource behind it.

12. A method according to Claim 11, **characterized in that** a network service agreement is concluded, without the joint operation of a home network of the mobile teleterminal element (10) or of an operator of the home network in question.

13. A method according to any of Claims 1-12, **characterized in that** at least one additional service is produced for the mobile teleterminal element (10) and/or at least one additional service is transmitted in the direction of the mobile teleterminal element (10).

14. A method according to Claim 13, **characterized in that**
- the agreement proposal message includes a defined additional service, and
- the additional service is produced and/or transmitted according to the agreement proposal message.

15. A method according to any of Claims 1-14, **characterized in that** at least one mobile teleterminal element (10) is selected, to which the agreement proposal message is sent, from a register of the mobile network or a resource or management system linked to it, using a desired criterion or desired criteria, in which case at least one desired criterion is a definition attached to the mobile teleterminal element in a register of the mobile network or of a resource or management system linked to it.

16. A method according to Claim 15, **characterized in that** the desired criterion or desired criteria include the fact that the mobile teleterminal element (10) is connected to a telecommunications network.

17. A method according to any of Claims 1 -16, **characterized in that** identification is carried out on the basis of the user of the mobile teleterminal element (10), for providing at least one additional service.

18. A method according to any of Claims 1-17, **characterized in that** an agreement on a desired consideration is included in the agreement proposal message and the related reply message, in which case a network or additional service is provided for the teleterminal element, a cash consideration, a functional consideration, such as performing a specified operation or specified operations, reading a specific page or specific pages, or viewing images, is agreed for the service, in which case the billing of the mobile teleterminal element (10) is not essential when carrying out the method.

19. Means for operating in a telecommunications network, **characterized in that** they are set to perform all the steps of any method according to Claims 1-18.

## Patentansprüche

1. Ein Verfahren zur Bereitstellung eines Netzwerkdienstes für ein Mobilendgerätelement, wobei der Netzwerkdienst Übertragungstechnologieanforderungen für einen Telekommunikationsdienst schafft und/oder definiert, **gekennzeichnet durch**
- Senden (103) einer Vereinbarungsvorschlagnachricht, welche einen Vorschlag für eine Netzwerkdienstvereinbarung enthält, von dem mobilen Netzwerk an das Mobilendgerätelement (10), wobei die Netzwerkdienstvereinbarung eine Vereinbarung hinsichtlich Bereitstellung und/oder Verwendung des Netzwerkdienstes und einer Berücksichtigung ist, welche für die Benutzung des Netzwerkdienstes berechnet wird;
- Empfangen (104) einer Nachricht **durch** das mobile Netzwerk von dem Mobilendgerätelement (10), welche so gesetzt ist, dass sie die Annahme der Netzwerkdienstvereinbarung mit einem bestimmten Inhalt kennzeichnet;
- Setzen (105) des mobilen Netzwerks so, dass das Mobilendgerätelement (10) mit Netzwerkdiensten vorsorgt wird und dass für die gelieferten Netzwerkdienste berechnet wird, abhängig von der empfangenen Netzwerkdienstvereinbarung.

2. Ein Verfahren nach Anspruch 1, **dadurch gekennzeichnet, dass**
- eine Identität des Mobilendgerätelements (10) aus einer Richtung des Mobilendgerätelements (10) empfangen wird (102),
- eine Überprüfung gemacht wird (102), ob die Identität des Mobilendgerätelements (10) in einem Teilnehmerregister des mobilen Netzwerks definiert ist, beispielsweise in irgendeinem Hausteilnehmerregister in dem mobilen Netzwerk;
- eine Vereinbarungsvorschlagnachricht in Richtung des Mobilendgerätelements (10) in Antwort auf eine bestimmte Art von Teilnehmerregistereintrag in einem Managementsystem des mobilen Netzwerks geschickt wird (103).

3. Ein Verfahren nach Anspruch 1 oder 2, **dadurch gekennzeichnet, dass**
- die Identität des Mobilendgerätelements (10) aus einer Richtung des Mobilendgerätelements (10) empfangen wird (101);
- eine Überprüfung gemacht wird (101), ob die Identität des Mobilendgerätelements (10) in einem Teilnehmerregister des mobilen Netzwerks definiert ist, beispielsweise in irgendeinem Hausteilnehmerregister;
- eine Vereinbarungsvorschlagnachricht in Richtung des Mobilendgerätelements (10) in Antwort auf das Fehlen eines Teilnehmerregistereintrags betreffend das Mobilendgerät (10) in dem Managementsystem des mobilen Netzwerks geschickt wird (103).

4. Ein Verfahren nach einem der Ansprüche 1 - 3, **dadurch gekennzeichnet, dass** die Vereinbarungsvorschlagnachricht mittels einer web page oder einer entsprechenden Art von mobiler Anwendung geschickt wird (103).

5. Ein Verfahren nach einem der Ansprüche 1 - 4, **dadurch gekennzeichnet, dass** die annehmbaren Verfahren für Zahlung, verfügbare Dienste, Dienstpakete, Rechnungsgrundlagen und/oder Preisinformationen in der Vereinbarungsvorschlagnachricht übertragen werden (103).

6. Ein Verfahren nach einem der Ansprüche 1 - 5, **dadurch gekennzeichnet, dass** das Mobilendgerätelement (10) in dem Managementsystem (104) des Mobilsystems abhängig von der Netzwerkdienstvereinbarung mit einem bestimmten Inhalt registriert wird (201).

7. Ein Verfahren nach Anspruch 6, **dadurch gekennzeichnet, dass** der Eintrag den Identifizierer des Mobilendgerätelements (10) und die Einstellungen enthält, welche von der Netzwerkdienstvereinbarung mit einem bestimmten Inhalt benötigt werden, beispielsweise Identifizierer der Dienste abhängig von der Netzwerkdienstvereinbarung und dem Umfang des verfügbaren Netzwerkdienstes, beispielsweise die bezahlte Geldsumme und/oder die Vebindungszeit.

8. Ein Verfahren nach einem der Ansprüche 1 - 7, **dadurch gekennzeichnet, dass**
- eine in Datenkommunikationsverbindung durch ein Trunk-Netzwerk (11) des mobilen Netzwerks zwischen dem Mobilendgerätelement (10) und einem Element des Trunk-Netzwerks (11) des mobilen Netzwerks oder zwischen dem Mobilendgerätelement (10) und einer mobilen Netzwerkquelle (13) gebildet wird (202);
- eine Gebrauchsinformation, beispielsweise CDR-Anruftickets (Call Detail Record) der von dem Mobilendgerätelement (10) benutzten Netzwerkdienste mittels eines Mediators (14) aus Richtung des Trunk-Netzwerks (11) des mobilen Netzwerks und/oder der mobilen Netzwerkquelle empfangen wird (203), wobei
- wenigstens eine Rechnungsnachricht aus der empfangenen Gebrauchsinformation gebildet wird, und
- die gebildete Rechnungsnachricht in Richtung eines Teilnehmermanagementelements (12) gesendet wird.

9. Ein Verfahren nach einem der Ansprüche 1-8, **dadurch** gekenneichnet, dass
- wenigstens eine Rechnungsnachricht mittels eines Mediators (14) in Richtung des Teilnehmermanagementelements (12) gesendet wird (204);
- ein Umfang der für das Mobilendgerätelement verfügbaren Teledienstes mittels der Funktionalität des Teilnehmermanagementelements (12) auf der Grundlage der empfangenen Rechnungsnachrichten verringert wird (205);
- wenigstens eine Nachricht, die das Recht zur Benutzung des mobilen Netzwerks oder der mobilen Netzwerkquelle beschränkt und das Mobilendgerätelement (10) anspricht, von dem Teilnehmermanagementelement (12) in Richtung des Trunk-Netzwerks (11) des mobilen Netzwerks gesendet wird.

10. Ein Verfahren nach einem der Ansprüche 1-9, **dadurch gekennzeichnet, dass**
- wenigstens eine Nachricht, welche die Rechte zur Benutzung des Mobilendgerätelements (10) begrenzt aus Richtung des Teilnehmermanagementelements (12) in dem Trunk-Netzwerk (11) des mobilen Netzwerks empfangen wird, und
- in Antwort auf die empfangene Nachricht, welche die Rechte zur Benutzung begrenzt, die Rechte zur Benutzung welche für das Mobilendgerätelement (10) in dem Teilnehmerregister oder sonstwo in dem Managementsystem des mobilen Netzwerks definiert sind, auf das Mobilendgerätelement (10) begrenzt werden.

11. Ein Verfahren nach einem der Ansprüche 1 - 10, **dadurch gekennzeichnet, dass** eine Vereinbarungsvorschlagnachricht in Richtung des Mobilendgerätelements (10) auf Initiative des mobilen Netzwerks oder einer dahinter liegenden Quelle gesendet wird.

12. Ein Verfahren nach Anspruch 11, **dadurch gekennzeichnet, dass** eine Netzwerkdienstvereinbarung ohne dem gemeinsamen Betrieb eines Hausnetzwerks des Mobilendgerätelements (10) oder eines Operators des in Frage stehenden Hausnetzwerks abgeschlossen wird.

13. Ein Verfahren nach einem der Ansprüche 1 -12, **dadurch gekennzeichnet, dass** wenigstens ein zusätzlicher Dienst für das Mobilendgerätelement (10)erzeugt wird und/oder das ein zusätzlicher Dienst in Richtung des Mobilendgerätelements (10) übertragen wird.

14. Ein Verfahren nach Anspruch 13, **dadurch gekennzeichnet, dass**
- die Vereinbarungsvorschlagnachricht einen definierten zusätzlichen Dienst enhält, und
- der zusätzliche Dienst gemäß der Vereinbarungsvorschlagnachricht erzeugt und/oder übertragen wird.

15. Ein Verfahren nach einem der Ansprüche 1-14, **dadurch gekennzeichnet, dass** wenigstens ein Mobilendgerätelement (10), an welches die Vereinbarungsvorschlagnachricht geschickt wird, aus einem Register des mobilen Netzwerks oder einer Quelle oder eines hiermit in Verbindung stehenden Managementsystems ausgewählt wird, wobei ein gewünschtes Kriterium oder gewünschte Kriterien verwendet werden, wobei in diesem Fall wenigstens ein gewünschtes Kriterium eine Definition ist, welche in dem Mobilendgerätelement in einem Register des mobilen Netzwerks hinzugefügt ist oder von einer Quelle oder einem hiermit in Verbindung stehenden Managementsystem.

16. Ein Verfahren nach Anspruch 15, **dadurch gekennzeichnet, dass** das gewünschte Kriterium oder die gewünschten Kriterien die Tatsache enthalten, dass das Mobilendgeräteiement (10) mit einem Telekommunikationsnetzwerk verbunden ist.

17. Ein Verfahren nach einem der Ansprüche 1 - 16, **dadurch gekennzeichnet, dass** die Identifikation auf der Grundlage des Benutzers des Mobilendgerätelements (10) durchgeführt wird, um wenigstens einen zusätzlichen Dienst bereit zu stellen,

18. Ein Verfahren nach einer der Ansprüche 1 - 17, **dadurch gekennzeichnet, dass** eine Vereinbarung über eine gewünschte Betrachtungsweise in der Vereinbarungsvorschlagnachricht und deren zugehörigen Anwortnachricht enthalten ist, wobei in diesem Fall ein Netzwerk oder ein zusätzlicher Dienst für das Endgerätelement bereitgestellt wird, eine Bezahlungsberücksichtigung, eine funktionelle Berücksichtigung, beispielsweise eine Durchführung eines festgelegten Betriebs oder festgelegter Betriebe, das Lesen einer bestimmten Seite oder bestimmter Seiten oder die Betrachtung von Bildern für den Dienst zugestimmt wird, wobei in diesem Fall die Berechnung für das Mobilendgerätelement (10) bei Durchführung des Verfahrens nicht wesentlich ist.

19. Mittel zum Betrieb in einem Telekommunikationsnetzwerk, **dadurch gekennzeichnet, dass** sie so eingestellt sind, das sie alle Schritte eines Verfahrens nach den Ansprüchen 1 - 18 durchführen.

## Revendications

1. Procédé permettant de fournir un service de réseau d'un réseau mobile pour un élément téléterminal mobile, dans lequel le service de réseau fournit et/ou définit des exigences en matière de technologie de transmission pour un service de télécommunications, **caractérisé par** les étapes consistant à :
- envoyer (103) un message de proposition d'accord, qui contient une proposition d'accord de service de réseau, par un réseau mobile à un élément téléterminal mobile (10), dans lequel ledit accord de service de réseau est un accord de fourniture et/ou d'utilisation du service de réseau et sur des services facturés pour l'utilisation dudit service de réseau,
- recevoir, par le réseau mobile, (104) un message, qui est défini pour signifier l'acceptation de l'accord de service de réseau avec un contenu spécifique, de l'élément téléterminal mobile (10), et
- définir (105) le réseau mobile pour fournir à l'élément téléterminal mobile (10) des services de réseau, et facturer les services de réseau fournis, en fonction de l'accord de service de réseau reçu.

2. Procédé selon la revendication 1, **caractérisé en ce que** :
- une identité de l'élément téléterminal mobile (10) est reçue (102) de l'élément téléterminal mobile (10),
- une vérification est effectuée (102), pour savoir si l'identité de l'élément téléterminal mobile (10) est définie dans un registre d'abonnés du réseau mobile, par exemple dans un registre des abonnés nominaux du réseau mobile, et
- un message de proposition d'accord est envoyé (103) à l'élément téléterminal mobile (10) en réponse à un type spécifique d'entrée dans le registre d'abonnés dans un système de gestion du réseau mobile.

3. Procédé selon la revendication 1 ou 2, **caractérisé en ce que** :
- l'identité de l'élément téléterminal mobile (10) est reçue (101) de l'élément téléterminal mobile (10),
- une vérification est effectuée (101) pour savoir si l'identité de l'élément téléterminal mobile (10) est définie dans un registre d'abonnés du réseau mobile, par exemple un registre des abonnés nominaux, et
- un message de proposition d'accord est envoyé (103) à l'élément téléterminal mobile (10), en réponse au manque d'entrée dans le registre d'abonnés concernant l'élément téléterminal mobile (10) dans le système de gestion du réseau mobile.

4. Procédé selon l'une quelconque des revendications 1 à 3, **caractérisé en ce que** le message de proposition d'accord est envoyé (103) au moyen d'une page Web, ou d'un type correspondant d'application mobile.

5. Procédé selon l'une quelconque des revendications 1 à 4, **caractérisé en ce que** les modes de paiement, services disponibles, ensembles de services, motifs de facturation et/ou informations de prix acceptables sont transmis (103) dans le message de proposition d'accord.

6. Procédé selon l'une quelconque des revendications 1 à 5, **caractérisé en ce que** l'élément téléterminal mobile (10) est enregistré (201) dans le système de gestion (104) du système mobile, en fonction de l'accord de service de réseau avec un contenu spécifique.

7. Procédé selon la revendication 6, **caractérisé en ce que** l'entrée inclut l'identifiant de l'élément téléterminal mobile (10) et les réglages requis par l'accord de service de réseau avec un contenu spécifique, comme les identifiants des services en fonction de l'accord de service de réseau et une quantité du service de réseau disponible, par exemple, la somme d'argent payée et/ou le temps de connexion.

8. Procédé selon l'une quelconque des revendications 1 à 7, **caractérisé en ce que** :
- une connexion de communication de données est formée (202) par le biais d'un réseau à ressources partagées (11) du réseau mobile, entre l'élément téléterminal mobile (10) et un élément du réseau à ressources partagées (11) du réseau mobile, ou entre l'élément téléterminal mobile (10) et une ressource du réseau téléphonique mobile (13), et
- des informations d'utilisation, comme des tickets d'appel CDR (enregistrement détaillé des appels), sur les services de réseau utilisés par l'élément téléterminal mobile (10), sont reçues (203) au moyen d'un médiateur (14), du réseau à ressources partagées (11) du réseau mobile et/ou de la ressource de réseau téléphonique mobile,
- au moins un message de facturation est formé à partir des informations d'utilisation reçues, et
- le message de facturation formé est envoyé à un élément de gestion d'abonnés (12).

9. Procédé selon l'une quelconque des revendications 1 à 8, **caractérisé en ce que** :
- au moins un message de facturation est envoyé (204) au moyen d'un médiateur (14) à l'élément de gestion d'abonnés (12),
- une quantité de téléservices rendus disponibles pour l'élément téléterminal mobile est réduite (205) au moyen de la fonctionnalité de l'élément de gestion d'abonnés (12), sur la base des messages de facturation reçus ; et
- au moins un message limitant le droit d'utilisation du réseau téléphonique mobile ou de la ressource de réseau téléphonique mobile, et ciblant l'élément téléterminal mobile (10), est envoyé par l'élément de gestion d'abonnés (12) au réseau à ressources partagées (11) du réseau téléphonique mobile.

10. Procédé selon l'une quelconque des revendications 1 à 9, **caractérisé en ce que** :
- au moins un message limitant les droits d'utilisation de l'élément téléterminal mobile (10) est reçu de l'élément de gestion d'abonnés (12) dans le réseau à ressources partagées (11) du réseau téléphonique mobile, et
- en réponse au message reçu limitant les droits d'utilisation, les droits d'utilisation définis pour l'élément téléterminal mobile (10) dans le registre d'abonnés ou à un autre endroit du système de gestion du réseau mobile, sont limités à l'élément téléterminal mobile (10).

11. Procédé selon l'une quelconque des revendications 1 à 10, **caractérisé en ce qu'**un message de proposition d'accord est envoyé à l'élément téléterminal mobile (10), à l'initiative du réseau téléphonique mobile, ou d'une ressource qui se trouve derrière celui-ci.

12. Procédé selon la revendication 11, **caractérisé en ce qu'**un accord de service de réseau est conclu, sans l'opération conjointe d'un réseau domestique de l'élément téléterminal mobile (10) ou d'un opérateur du réseau domestique en question.

13. Procédé selon l'une quelconque des revendications 1 à 12, **caractérisé en ce qu'**au moins un service supplémentaire est produit pour l'élément téléterminal mobile (10) et/ou au moins un service supplémentaire est transmis à l'élément téléterminal mobile (10).

14. Procédé selon la revendication 13, **caractérisé en ce que** :
- le message de proposition d'accord comporte un service supplémentaire défini, et
- le service supplémentaire est produit et/ou transmis en fonction du message de proposition d'accord.

15. Procédé selon l'une quelconque des revendications 1 à 14, **caractérisé en ce qu'**au moins un élément téléterminal mobile (10) est sélectionné, auquel le message de proposition d'accord est envoyé, à partir d'un registre du réseau mobile ou d'une ressource ou d'un système de gestion lié à celui-ci, en utilisant un critère souhaité ou des critères souhaités, auquel cas au moins un critère souhaité est une définition liée à l'élément téléterminal mobile dans un registre du réseau mobile ou d'une ressource ou d'un système de gestion lié à celui-ci.

16. Procédé selon la revendication 15, **caractérisé en ce que** le critère souhaité ou les critères souhaités comprennent le fait que l'élément téléterminal mobile (10) est connecté à un réseau de télécommunications.

17. Procédé selon l'une quelconque des revendications 1 à 16, **caractérisé en ce que** l'identification est effectuée sur la base de l'utilisateur de l'élément téléterminal mobile (10), pour fournir au moins un service supplémentaire.

18. Procédé selon l'une quelconque des revendications 1 à 17, **caractérisé en ce qu'**un accord sur une question souhaitée est inclus dans le message de proposition d'accord et le message de réponse apparenté, auquel cas un service de réseau ou un service supplémentaire est fourni pour l'élément téléterminal, une question d'argent, une question fonctionnelle, par exemple effectuer une opération spécifique ou des opérations spécifiques, lire une page spécifique ou des pages spécifiques, ou visualiser des images, est acceptée par le service, auquel cas la facturation de l'élément téléterminal mobile (10) n'est pas essentielle lorsqu'on exécute le procédé.

19. Moyens pouvant fonctionner dans un réseau de télécommunications, **caractérisés en ce qu'**ils sont définis pour exécuter toutes les étapes d'un procédé quelconque selon les revendications 1 à 18.
